# EUROPEAN PATENT SPECIFICATION

(11) **EP 2 687 357 B1**
(45) Date of publication and mention of the grant of the patent: **24.12.2014**
(21) Application number: 12176588.7
(22) Date of filing: 16.07.2012
(51) Int. Cl.: B29C 70/54

(54) **Method and system for producing fiber composite components**
Verfahren und System zur Herstellung von Faserverbundstoffkomponenten
Procédé et système de production de composants composites à base de fibres

(43) Date of publication of application: 22.01.2014
(73) Proprietor: Airbus Operations GmbH, 21129 Hamburg (DE)
(72) Inventor: Seegel, Hauke, 21683 Stade-Buetzfleth (DE); Fastert, Claus, 21706 Drochtersen (DE); Fideu, Paulin, 21682 Stade (DE)
(74) Representative: Isarpatent

(56) References cited:
- US-A1- 2002 146 529
- US-B1- 6 558 590
- US-B2- 6 586 054

## Description

The present invention relates to a method and system for producing a fiber composite component, particularly for an aerofoil structure or a fuselage structure of an aircraft.

To reduce the amount of auxiliary materials required during fabrication of such fiber composite components, the concept of a so-called "Integrated Flowing Aid" was developed, as is described in German patent application DE 10 2007 013 987 A1. The "Integrated Flowing Aid" concept involves the use of a molding tool having a plurality of grooves or channels for feeding or distributing matrix material to a semi-finished fiber product supported by the molding tool. This concept has demonstrated a number of drawbacks, however. To ensure proper de-molding (molding tool removal) and cleaning, for example, the whole tooling surface has to be treated with release agents, and especially the resin channels need extensive attention to ensure that de-molding is effective. Otherwise, all of the channels tend to remain filled with cured resin and are not usable in a second molding operation.

Even when the treatment of the tooling surface with release agents is performed properly, a layer of peel ply is still required between the tooling and the preform to remove resin parts formed by the resin channels. This, in turn, leads to a comparatively rough component surface. As a result of poorly designed resin channels, marks can occur on the component and inside the component the marks may form unwanted undulations in the reinforcing fibers. Also, as a result of the channels, a greater amount of resin is needed for each molding infusion or operation than would be necessary without the channels.

In addition to the above issues, a precise machining of the resin channels is required to produce a high quality surface finish, as a rough surface on the tooling can generate a high level of adhesion of cured resin to the tooling and result in blocked channels and/or the application of higher forces for de-molding which, in turn, can potentially damage the part or component produced. Other examples of the use of grooves or channels to assist the delivery of resin in the molding of composite components are described in US 2002/0146529 A1 and US 6,586,054 B2. As an alternative, however, US 6,558,590 B1 describes the use of pressure zones via pressure actuators to enhance resin distribution.

It is therefore an object of the present invention to provide a new and improved method and system for producing a fiber composite component, especially for an aerofoil structure or a fuselage structure of an aircraft, which addresses one or more of the drawbacks described above.

In accordance with this invention, methods of producing a fiber composite component as recited in claim 1 and a molding tool system for producing a fiber composite component as recited in claim 7 are provided. Preferred features of the invention are recited in the dependent claims.

According to one aspect, therefore, the invention provides a method of producing a fiber composite component, comprising the steps of:
providing a molding tool for supporting a semi-finished fiber product thereon, wherein the molding tool provides a plurality of cavities or openings for feeding or distributing matrix material to the semi-finished fiber product;
feeding matrix material to the semi-finished fiber product supported on the molding tool via the plurality of cavities or openings; and
expelling remaining matrix material from the cavities or openings upon conclusion of the feeding step. This step of expelling the matrix material that remains in the cavities or openings is desirably performed by forcing at least part of that remaining matrix material from the cavities or openings into the semi-finished fiber product.

In a preferred embodiment, the molding tool is provided with a film that is preferably substantially impermeable to the matrix material. The method includes the step of: forming or lining the plurality of cavities or openings in the molding tool with the film, and the step of expelling the matrix material includes releasing the film from the cavities or openings. In a particularly preferred embodiment, the film is resilient and the step of forming or lining the cavities or openings in the molding tool with the film includes holding the film in a stretched or tensioned state. Thus, the step of releasing the film from the cavities or openings typically comprises releasing the film from this stretched or tensioned state.

In a preferred embodiment, the step of forming or lining the cavities or openings in the molding tool includes drawing the film against a surface of the molding tool, especially under a vacuum or negative pressure. In this regard, the cavities or openings are preferably provided in said surface of the molding tool; for example, in the form of grooves or channels for conveying matrix material to the semi-finished fiber product. Instead of applying a vacuum, the film may simply be held or pressed against the surface of the molding tool under the pressure of the matrix material introduced into the tool. The step of releasing the resilient film from the cavities or openings may therefore separate the film from the surface of the molding tool. This step of releasing the resilient film from the cavities or openings may include removing a vacuum or applying fluid pressure between the molding tool surface and the film to press or force the film out of the cavities or openings towards the semi-finished fiber product.

In this solution, therefore, the method involves the use of a film layer in a significantly different manner to that known from the prior art. Specifically, the film is impermeable to the matrix material and either forms a lining in the grooves or channels, or it forms the grooves or channels themselves. In this way, the film separates or isolates an upper surface of the molding tool from the semi-finished fiber product to be impregnated with matrix, such that the matrix material flows over the film and does not directly contact that surface of the molding tool. The film may be tensioned or stretched by applying a vacuum to draw the film tautly over a surface of the molding tool base, and this includes into the grooves or channels for conveying the matrix material to the semi-finished fiber product. Thus, upon concluding feeding of the matrix material, the vacuum can be terminated. The film is then released from its stretched or tensioned state lining or forming the grooves or channels and is allowed to return to a less-tensioned state. Accordingly, release or removal of the resilient film after feeding the matrix material to the semi-finished fiber product not only acts to force remaining matrix material out of the grooves or channels and into that fiber product, but also ensures that the component fabricated separates readily from the molding tool.

By using a film in this way, the film imparts a very smooth surface finish to the molding tool, including in the grooves or channels for conveying the matrix resin. This provides for smooth component surfaces and very good molding tool removal or de-molding without the need for machining the molding tool surfaces to high tolerances or for applying excessive amounts of release agent. In addition, the conventional release films described in DE 10 2007 013 987 A1 do not necessarily need to be used, which also reduces the amount of auxiliary materials required.

In a preferred embodiment, the step of expelling the matrix material comprises introducing a displacement member into each of the respective cavities or openings to displace or dispel the remaining matrix material from those cavities or openings. At least a portion of the remaining matrix material can be thereby pressed or forced into the semi-finished fiber product to be impregnated with the matrix. The step or act of introducing the displacement members into the respective cavities or openings may essentially close those cavities or openings to isolate the semi-finished fiber product therefrom. In an especially preferred embodiment, the displacement members have a shape or form that substantially corresponds to a shape or form of the cavities or openings. For example, the displacement member could include a deformable body (e.g. expandable body) inside a respective cavity or opening, which can be deformed or expanded to displace the matrix material and to cover or close that cavity or opening. As above, the cavities or openings are typically formed in a surface of the molding tool and are preferably in the form of grooves or channels. The entire content of DE 10 2007 013 987 A1 and the corresponding US 2008/0044506 A1 are herein referenced, whereby arrangements and variations of the grooves or channels in the molding tool are apparent therefrom.

In this solution, therefore, the method involves the use of displacement members both for expelling the remaining matrix material from the respective cavities or openings and also for separating or isolating the semi-finished product or the component produced from those cavities or openings when the delivery of the matrix material is finished.

According to another aspect, the invention provides a method of producing a fiber composite component, comprising the steps of:
providing a molding tool that supports the semi-finished fiber product on a surface having a plurality of cavities or openings for feeding or distributing matrix material to the semi-finished fiber product;
feeding matrix material to the semi-finished fiber product supported on the molding tool via the plurality of cavities or openings; and
modifying said surface of the molding tool to at least partially eliminate, cover or close said cavities or openings upon conclusion of the feeding step.

In this aspect, therefore, the step of modifying the surface of the molding tool to at least partially eliminate or close the cavities or openings is preferably designed to provide a smooth and/or substantially continuous surface at the semi-finished fiber product after it has been impregnated with matrix material, such that the cavities or openings (e.g. grooves or channels) do not negatively impact upon the form or structure of the fiber composite component produced during curing.

In a preferred embodiment, the molding tool is provided with a film that is preferably substantially impermeable to the matrix material. The method includes the step of: forming or lining the plurality of cavities or openings in the molding tool with the film, and the step of modifying the surface of the molding tool may include releasing the film from the cavities or openings. As noted above, the step of forming or lining the cavities or openings in the molding tool may include drawing the film against a surface of the molding tool, especially under a vacuum or negative pressure, and the step of releasing the film may therefore separate the film from the surface of the molding tool and thereby close or eliminate the cavities or openings. The step of releasing the film from the cavities or openings may include removing a vacuum or applying fluid pressure between the molding tool surface and the film to press or force the film out of the cavities or openings towards the semi-finished fiber product. It will be noted that a molding tool in the method and system of the invention may form a closed mold (e.g. a RTM process) or an open mold (e.g. a VPA process), as described and shown in DE 10 2007 013 987 A1 and US 2008/0044506 A1.

In another embodiment, the step of modifying the surface of the molding tool includes introducing a member into each of the respective cavities or openings to close or cover those cavities or openings. In this regard, each member preferably presents a surface to the semi-finished fiber product which complements the surface of the molding tool, such that the surface of the molding tool is then substantially smooth or continuous over the semi-finished fiber product.

According to another aspect, the invention provides a molding tool system for producing fiber composite components, the molding tool system comprising:
a molding tool for supporting a semi-finished fiber product, wherein the molding tool provides a plurality of cavities or openings for conveying or feeding matrix material to the semi-finished fiber product supported thereon; and
an arrangement configured to expel the matrix material remaining in the cavities or openings upon conclusion of feeding of the matrix material.

In a preferred embodiment, the arrangement is configured to force at least a portion of the matrix material remaining in the cavities or openings into the semi-finished fiber product supported on the molding tool. By expelling the remaining matrix material from the cavities or openings and forcing at least some of it, and preferably all of it, into the fiber product supported on the molding tool, the system is able to use the available matrix material more effectively and with less wastage. Furthermore, problems associated with remnants of the matrix material adhering to the cavities or openings after curing can be substantially avoided.

In a preferred embodiment, the arrangement comprises a film which is substantially impermeable to the matrix material and which forms or lines the plurality of cavities or openings in the molding tool. In this regard, the film may be resilient or elastic and is arranged to form or line the cavities or openings in a stretched or tensioned state. In particular, the film may be arranged to extend across a surface of the molding tool, i.e. beneath the semi-finished product located on the molding tool, and may be drawn against said surface, preferably via a vacuum or an under pressure. In this way, by releasing the film from that stretched or tensioned state, the film is preferably adapted to force at least some of the matrix material remaining in the cavities or openings into the semi-finished fiber product.

As discussed above, by using a film in this manner, a highly smooth finish can be provided by the film over the surfaces of the molding tool, including the grooves or channels. This provides for smooth component surfaces and very good mold removal or de-molding, without the need for machining those surfaces to high tolerances. In addition, permeable release films described in DE 10 2007 013 987 A1 need not necessarily be used, reducing the auxiliary materials required.

In a preferred embodiment, the arrangement includes a number of displacement members that are respectively insertable into the plurality of cavities or openings to displace or dispel the remaining matrix material from the cavities or openings. The displacement members may be configured to substantially close the cavities or openings for isolating the impregnated semi-finished fiber product therefrom. Furthermore, each of the displacement members preferably has a shape or form that substantially corresponds to a shape or form of the cavity or opening into which it is introduced or inserted. In this way, the displacement members can expel substantially all of the remaining matrix material in a respective cavity or opening.

In a preferred embodiment of this invention, the cavities or openings are formed as grooves or channels in a surface of the molding tool. A width of the grooves or channels will preferably lie in the range of 0.1 mm to 10 mm. Preferably, at least one of a density per unit area, a width, a depth, an arrangement, an orientation, a routing and a cross-sectional form of the grooves or channels is adapted to a predetermined impregnating property of the semi-finished fiber product. In one embodiment, for example, the grooves or channels are provided with a first density per unit area in a first region of the surface and the grooves are provided with a second density per unit area in a second region of the surface. In a further embodiment, the grooves or channels are inclined at an angle in relation to lines joining an inlet and an outlet in a third region of the surface, the angle being in a range from 0° to 90°. Further, the grooves or channels may have a first width in a fourth region of the surface and a second width in a fifth region of the surface, the first width being greater than the second width. In this regard, the entire content of DE 10 2007 013 987 A1 and US 2008/0044506 A1 are herein referenced, such that arrangements and variations of the grooves or channels in the molding tool are apparent therefrom.

In a preferred embodiment, the molding tool system comprises an inlet for feeding the matrix to the semi-finished fiber product and an outlet for carrying away the matrix material. The inlet and the outlet are preferably arranged in different planes, as in DE 10 2007 013 987 A1 and US 2008/0044506 A1.

As already mentioned above, an advantage of the invention is a reduction of the amount of matrix material or resin needed for the molding or infusion process. Additional advantages of the invention include an increase in the repeatability of the molding or infusion process and a decrease in the error rate.

According to still a further aspect, the invention provides a molding tool system for producing fiber composite components, the molding tool system comprising:
a molding tool to support a semi-finished fiber product on a surface having a plurality of cavities or openings for feeding or distributing matrix material to the semi-finished fiber product supported thereon; and
an arrangement configured to modify said surface of the molding tool to at least partially eliminate, cover, or close the cavities or openings upon conclusion of feeding of the matrix material.

As noted already, in a preferred embodiment the arrangement may comprise a film which is substantially impermeable to the matrix material and which forms or lines the plurality of cavities or openings in the molding tool. Preferably, the film forms and/or lines the plurality of cavities or openings in a stretched or tensioned state, and the film is adapted to force at least some of the matrix material remaining in the cavities or openings into the semi-finished fiber product when the film is released from the stretched or tensioned state. In this regard, the film may be resilient or elastic and may be arranged to form or line the cavities or openings in a stretched or tensioned state. In particular, the film may extend across a surface of the molding tool, i.e. beneath the semi-finished product located on the molding tool, and may be drawn against said surface, preferably via a vacuum or an under pressure. In this way, by releasing the film from that stretched or tensioned state, the film may be adapted to modify the surface of the molding tool to partially, or even entirely, eliminate, cover or close the cavities or openings, and thus present a continuous and/or smooth surface for the curing of the impregnated semi-finished fiber product.

In another embodiment, the arrangement includes a number of insertion members that are respectively insertable into the cavities or openings to substantially cover or close those cavities or openings. That is, the insertion members may be configured to substantially cover or close the cavities or openings for isolating the impregnated semi-finished fiber product therefrom, thus to present a continuous and/or smooth surface during curing of the impregnated semi-finished fiber product. In this regard, each member may have a shape or form that substantially corresponds to a shape or form of the respective cavity or opening.

According to yet another aspect, the invention provides an aerofoil structure or a fuselage structure of an aircraft comprising at least one fiber composite component fabricated with a molding tool system or a method of the invention as described above with respect to any one of the embodiments.

For a more complete understanding of the invention and the advantages thereof, exemplary embodiments of the invention are explained in more detail in the following description with reference to the accompanying drawing figures, in which like reference characters designate like parts and in which:
- Fig. 1: is a schematic cross-sectional view of a molding tool system according to a first embodiment of the invention supporting a semi-finished fiber product;
- Fig. 2: is a schematic cross-sectional view of a molding tool system according to a second embodiment of the invention supporting a semi-finished fiber product;
- Fig. 3: is a schematic cross-sectional view of a molding tool system according to a third embodiment of the invention supporting a semi-finished fiber product;
- Fig. 4: is a flow diagram which schematically represents a method according to an embodiment of the invention; and
- Fig. 5: shows an aircraft according to an embodiment of the invention.

The accompanying drawings are included to provide a further understanding of the present invention and are incorporated in and constitute a part of this specification. The drawings illustrate particular embodiments of the invention and together with the description serve to explain the principles of the invention. Other embodiments of the invention and many of the attendant advantages of the invention will be readily appreciated as they become better understood with reference to the following detailed description.

It will be appreciated that common and well understood elements that may be useful or necessary in a commercially feasible embodiment are not necessarily depicted in order to facilitate a less abstracted view of the embodiments. The elements of the drawings are not necessarily illustrated to scale relative to each other. It will further be appreciated that certain actions and/or steps in an embodiment of a method may be described or depicted in a particular order of occurrences while those skilled in the art will understand that such specificity with respect to sequence is not actually required. It will also be understood that the terms and expressions used in the present specification have the ordinary meaning as it accorded to such terms and expressions with respect to their corresponding respective areas of inquiry and study, except where specific meanings have otherwise been set forth herein.

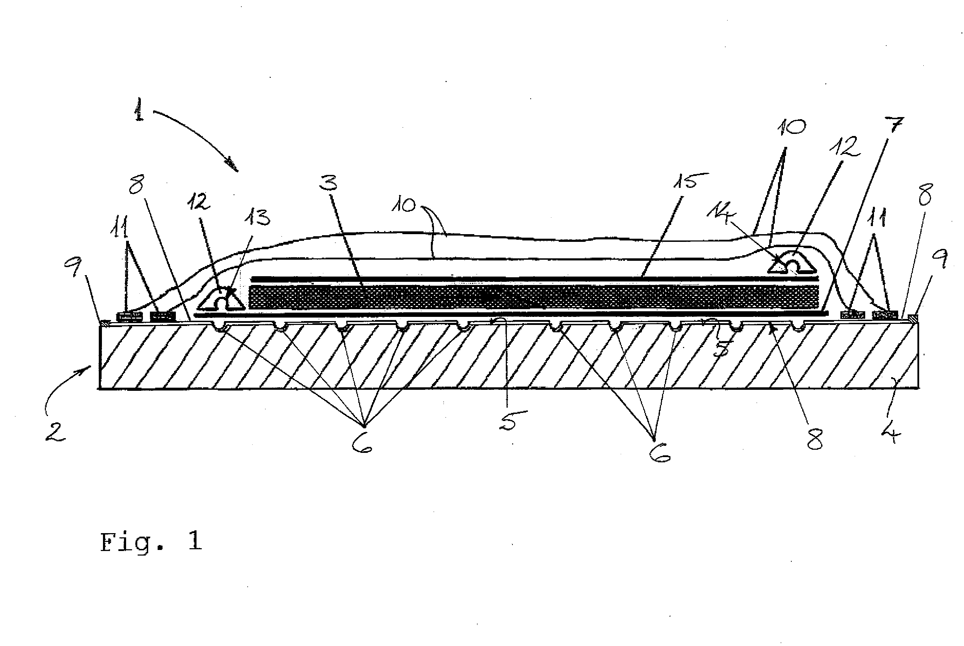

With reference to Fig. 1 of the drawings, a cross-sectional view of a molding tool system 1 according to an embodiment of the invention is shown. The molding tool system 1 naturally includes a molding tool 2 upon which a semi-finished fiber product 3 is supported. The molding tool 2 of the system 1 in this example comprises a base 4, which is preferably formed of metal, but may also be formed of a plastic, a ceramic or another suitable material. An upper surface 5 of the base 4 at least partially defines a shape of the component to be produced by impregnating the semi-finished fiber product 3 with a liquid matrix material, typically resin, then curing same. Grooves or channels 6 are formed in the upper surface 5 of the molding tool base 4 and are configured to convey or feed or distribute the matrix material more or less uniformly over an area covered by the semi-finished fiber product 3. In this example the cross-section of each groove or channel 6 is semi-cylindrical, but it may also be any other desired form. The width of each groove or channel 6 preferably lies in the range of 0.1 mm to 10 mm, while the depth of each groove or channel 6 may be of the same order of magnitude. It will be noted that the size and shape of the grooves or channels 6 can be chosen to influence throughput of the matrix resin. Two or more of the grooves or channels 6 may also differ in cross-section, geometry, width, and/or arrangement over at least a part of their length or over their entire length.

The semi-finished fiber product 3 is arranged and supported on the molding tool 2 so as to follow the contours or profile of the surface 5. The semi-finished fiber product 3 may, for example, comprise a laid, woven or knitted fabric, non-woven fabric, loose fibers, and/or a sandwich-like structure (e.g. with a preform core) as a preform stack. A thickness of the semi-finished fiber product 3 may also vary over the upper surface 5. A peel ply and/or a release film 7 may optionally also be arranged between the upper surface 5 of the molding tool base 4 and the semi-finished fiber product 3, though this peel ply 7 is unnecessary with the present invention, as will be apparent from the following description.

Before the semi-finished fiber product 3 (with optional peel ply 7) is placed on the molding tool base 4, a flexible and resilient film 8 with resin release properties (e.g. a plasma treated TPE film) is placed and drawn tautly over the upper surface 5 and is sealed to the base 4 at its edges 9. The air between the upper surface 5 and the resilient film 8 is then evacuated by a pump (not shown) so that the film 8 is sucked onto or drawn against the upper surface 5 and fully conforms to the contours of the molding tool base 4, including the grooves or channels 6 such that the film 8 forms a lining in each of those grooves or channels 6. The resilient film 8 is thereby elastically deformed into a tensioned or stretched state over the molding tool 2, as shown in Fig. 1.

The semi-finished fiber product 3 (i.e. preform stack with optional peel ply or release film 7) is then placed on top of the film 8 such that it is supported on the molding tool 2 and the entire construction is packed in an airtight manner by means of a vacuum bagging films 10 and sealing strips 11. In this regard, it can be expedient to use a double-walled vacuum film 10, as shown in FIG. 1. In principle, other types of vacuum bagging that are necessary for different processes are also possible (e.g. for introducing membranes in vacuum-assisted processing (VAP) or where the inlet and outlet are identical with single line injection (SLI)). The air enclosed under the vacuum films 10 is then extracted or evacuated by a pump via one or more connection 12.

An inlet 13 is connected to a reservoir (not shown) of liquid matrix material, e.g. resin. The resin matrix material is drawn into the bagging formed by vacuum films 10 by virtue of the pressure gradient created by pumping connections 12. The matrix resin flows over the film 8 on the upper surface 5 of the molding tool base 4 of the system 1, and through the semi-finished fiber product or preform stack 3. In so doing, the grooves or channels 6 act to feed or convey the matrix resin uniformly to the semi-finished fiber product 3. If using a VAP process, evacuation occurs over the whole surface or outer mold line of the semi-finished fiber product, which may then be thoroughly impregnated with the matrix resin. Excess resin is usually not present, though if it were, is able to be carried away at an outlet 14 together with any air via the pump connections 12.

The inlet 13 and/or the outlet 14 may be incorporated in the base 4 of the molding tool 2. Alternatively, it is possible to provide them as conventional tubular or local ports which are packed underneath the vacuum film 10, as shown in Fig. 1. The inlet 13 and the outlet 14 are preferably arranged in different planes, and preferably also on different sides of the semi-finished fiber product 3.

Once a sufficient amount of matrix resin has been fed to the preform stack 3, the introduction or influx of resin matrix material via the inlet 13 can be stopped. The vacuum between the resilient film 8 and the molding tool base 4 can then be removed or terminated, which causes the film 8 to relax from its stretched or tensioned state to re-assume an essentially flat condition or configuration. Thus, the film 8 is released and, due to both its elastic properties and the vacuum under the bagging 10, the film 8 starts to move out of the grooves or channels 6 towards the preform 3. Accordingly, the film 8 and the matrix resin it carries, is forced out of the grooves or channels 6 under the combined action of its own elasticity or resilience and the vacuum from the bagging 10. In so doing the film 8 lifts or forces the remaining matrix resin out of the grooves or channels 6 and into the semi-finished fiber product 3. As the flattening film 8 is impermeable to the matrix resin, the upper surface 5 of the base 4, including grooves or channels 6, is entirely free of resin material and the resin that was held in the channels 6 is now uniformly distributed towards the component being molded. Furthermore, the now flattened film 8 provides a highly smooth surface for curing of the resin. Also, due to the very good release properties of the film 8, the separate release layer or peel ply 7 becomes unnecessary and can be omitted. After curing, therefore, the resilient film 8 can be readily released from the component and generates a high quality and very smooth surface. An upper release layer or peel ply 15 between the preform stack 3 and the vacuum bagging film 10 does remain desirable, however.

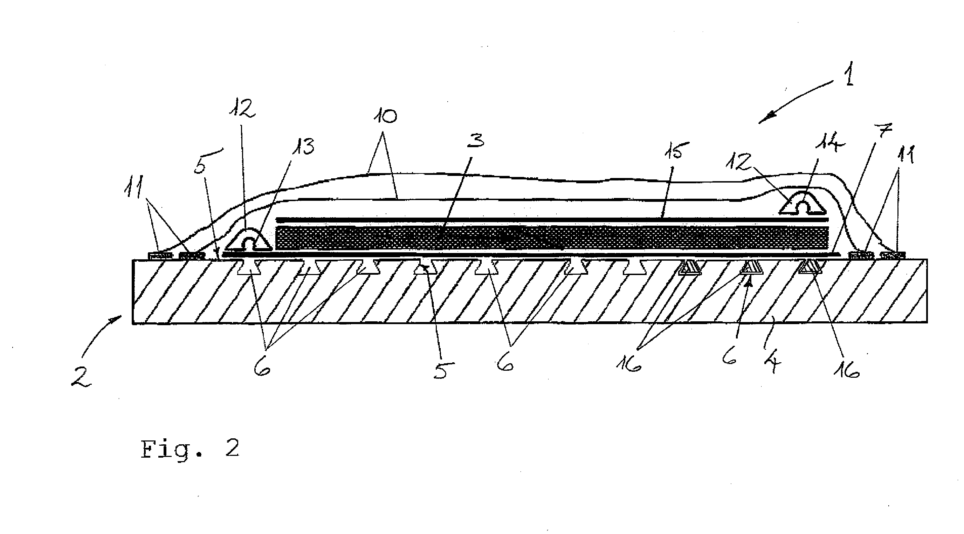

With reference now to drawing Fig. 2, a cross-sectional view of a molding tool system 1 according to another embodiment is shown. In this embodiment, no resilient film 8 is present, although it may optionally be employed in conjunction with the other features to be described. Each of the channels or grooves 6 formed in the upper surface 5 of the molding tool 2 in this embodiment has a dove-tailed shape in longitudinal cross-section and includes a respective slider member 16 (of which only 3 are shown). Each slider member 16 has a shape or cross-section which fits snugly within its corresponding groove or channel 6 and is sized to be slidably insertable therein. Each of the slider members 16 may be actuated for sliding movement in a respective groove or channel 6 by air-pressure (pneumatically), hydraulically, thermal expansion, by shape memory materials, by servo or even by hand.

Before conveying or infusion feeding the liquid matrix resin to the system 1, the slider members 16 are drawn back to open the grooves or channels 6 to resin flow. In this way, grooves or channels 6 serve to convey or distribute the liquid matrix resin to the semi-finished fiber product or preform stack 3 in the manner described above. Upon completing an infusion of the matrix resin, however, the slider members 16 are reinserted into the channels 6. By doing so, matrix resin that remains in the grooves or channels 6 can be pushed out or expelled therefrom and is forced, at least partially, into the semi-finished fiber product or preform stack 3. At the same time, insertion the slider members 16 also generates an even or flat upper surface 5 on the molding tool 2 again, and after curing, this can further simplify removal or de-molding of the newly fabricated component from the tool 2. To reduce the effort associated with application of release agents to the upper surface 5 and the slider members 16, this technique can be combined with the flexible film 8 described above with reference to Fig. 1. That is, the slider members 16 could be used in combination with the film 8 the dove-tail channels 6.

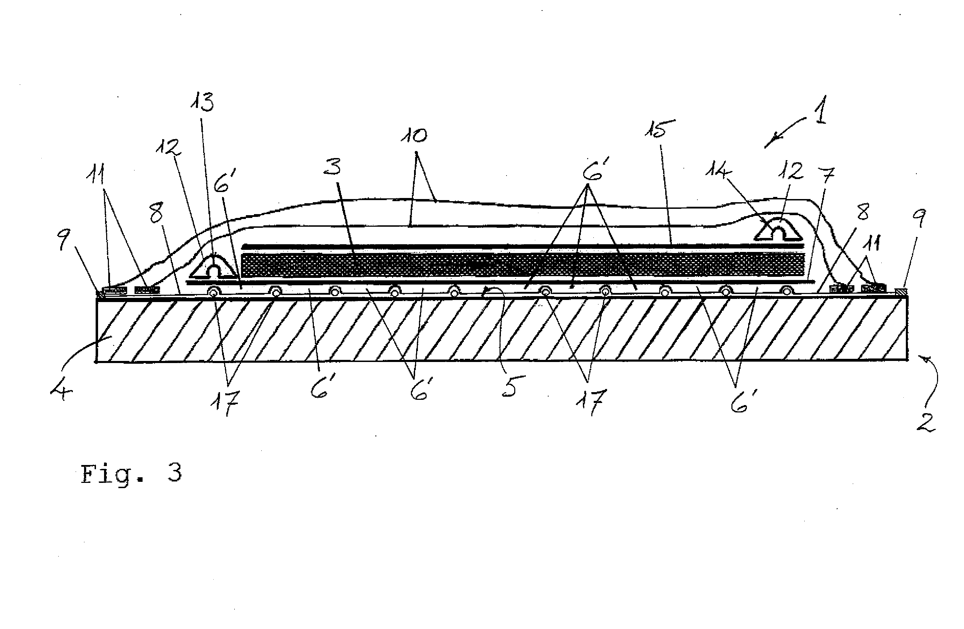

Referring now to Fig. 3 of the drawings, a cross-sectional view of a molding tool system 1 of a further embodiment is shown. This embodiment again employs a flexible or resilient film 8, but without grooves or channels 6 formed in a base 4 of the molding tool 2. Rather, upper surface 5 of the molding tool base 4 in this embodiment merely follows the contours or profile desired in the molded component. Instead, therefore, cavities or channels 6' for resin transport are generated by an interaction between the film 8 and one or more element 17, such as a fabric or fleece, placed on and the upper surface 5 of the tool 2 under the film 8. After the film 8 is arranged flat and taut over the surface 5 and sealed at its edges 9, a vacuum is applied between the film 8 and upper surface 5 of the tool base 4 as before. Due to the properties of the film, the film 8 follows close to the structure of the fabric or fleece (represented here as discrete elements 17) between the film 8 and tool base 4 and generates the resin channels 6' desired for conveying the matrix resin. After infusion, the vacuum is released and the structure disappears because the film 8 resumes its taut, flat configuration and any matrix resin material remaining in those cavities or channels 6' is forced into the semi-finished fiber product or preform 3. The curing and de-molding of the component produced then follows the same as for the molding tool system 1 described with reference to Fig. 1.

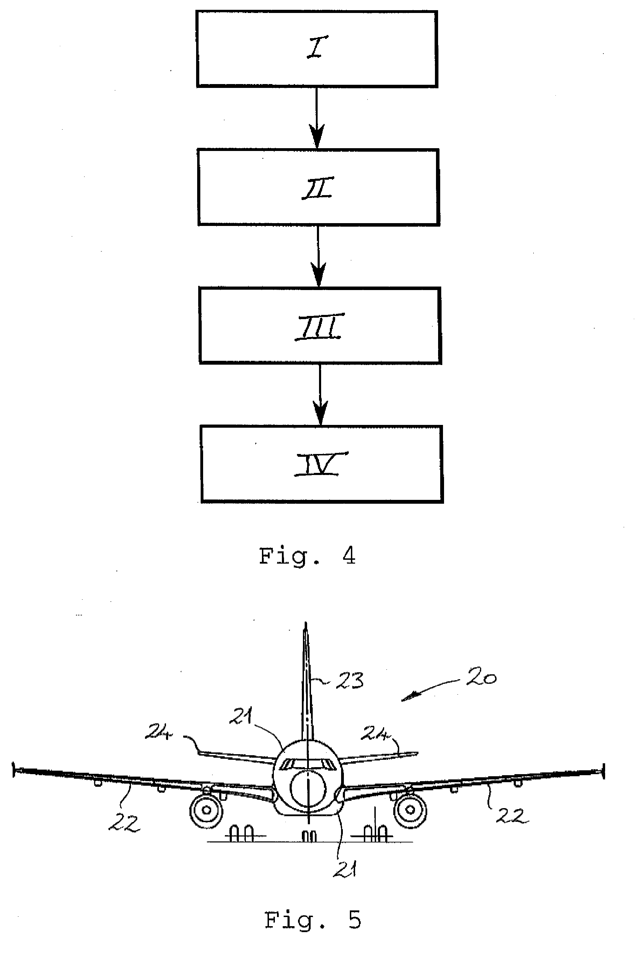

With reference now to Fig. 4 of the drawings, an example of a method of producing a fiber composite component according to the invention is illustrated schematically, with the numbered boxes I to IV of the diagram representing steps of the method. The first box I represents the step of providing a molding tool 2 for supporting a semi-finished fiber product or preform 3 thereon, the molding tool 2 having a plurality of cavities or openings in the form of grooves or channels 6 for feeding or conveying matrix material to the semi-finished fiber product or preform 3. The second box II represents the step of feeding or conveying matrix material to the semi-finished fiber product or preform 3 supported on the molding tool 2 via the plurality of grooves or channels 6. The third box III represents the step of expelling any matrix material remaining from the grooves or channels 6 upon conclusion of the feeding step, especially by forcing at least a portion of the matrix material remaining in those grooves or channels 6 into the semi-finished fiber product 3. The third box III may thus represent either one or both of: releasing the resilient film 8 from its stretched or tensioned state and/or inserting slider members 16 into the grooves or channels 6. The fourth box IV represents the steps of curing the semi-finished fiber product or preform 3 after it has been impregnated with the liquid matrix material to form the fiber composite component, and subsequently removing (i.e. de-molding) that component from the molding tool 2.

Finally, an aircraft 20 which includes one or more of the fiber composite components produced via a method and molding tool system 1 of the invention described in detail above with reference to Figs. 1 to 4 is shown schematically in Fig. 5. The one or more fiber composite components are incorporated in a structure of a fuselage 21, wings 22, tail 23 and/or horizontal stabilizers 24 of the aircraft 20.

Although specific embodiments of the invention have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way.

Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

In this document, the terms "comprise", "comprising", "include", "including", "contain", "containing", "have", "having", and any variations thereof, are intended to be understood in an inclusive (i.e. non-exclusive) sense, such that the process, method, device, apparatus or system described herein is not limited to those features or parts or elements or steps recited but may include other elements, features, parts or steps not expressly listed or inherent to such process, method, article, or apparatus. Furthermore, the terms "a" and "an" used herein are intended to be understood as meaning one or more unless explicitly stated otherwise. Moreover, the terms "first", "second", "third", etc. are used merely as labels, and are not intended to impose numerical requirements on or to establish a certain ranking of importance of their objects.

### List of Reference Signs

- 1: molding tool system
- 2: molding tool
- 3: semi-finished fiber product or preform stack
- 4: molding tool base
- 5: upper surface of base
- 6: groove or channel
- 6': groove or channel
- 7: release film or peel ply
- 8: resilient film
- 9: sealed edge of resilient film
- 10: vacuum bagging film
- 11: sealing strip
- 12: vacuum pump connection
- 13: matrix resin inlet
- 14: matrix resin outlet
- 15: release film or peel ply
- 16: slider member
- 17: element
- 20: aircraft
- 21: fuselage
- 22: wing
- 23: tail
- 24: horizontal stabilizer

## Claims

1. A method of producing a fiber composite component, the method comprising the steps of:
providing a molding tool (2) for supporting a semi-finished fiber product (3) thereon, wherein the molding tool provides a plurality of cavities or openings (6, 6') for feeding or conveying matrix material to the semi-finished fiber product (3) and wherein the molding tool (2) includes a film (8) that is substantially impermeable to the matrix material, the plurality of cavities or openings (6, 6')being formed or lined with the film (8);
feeding matrix material to the semi-finished fiber product supported on the molding tool via the plurality of cavities or openings (6, 6'); and
expelling matrix material remaining in the cavities or openings (6, 6') upon conclusion of the feeding step;
wherein the step of expelling the matrix material includes releasing the film (8) from the cavities or openings (6, 6') and forcing at least a portion of the matrix material remaining in the cavities or openings (6, 6') into the semi-finished fiber product (3).

2. A method according to claim 1, wherein the step of forming or lining the plurality of cavities or openings (6, 6') in the molding tool with the film (8) comprises holding the film (8) onto or against a surface (5) of the molding tool (2) in a tensioned or stretched state, especially via a vacuum or negative pressure.

3. A method according to claim 2, wherein releasing the film from the cavities or openings comprises releasing the film from said stretched or tensioned state.

4. A method according to claim 1, wherein the step of expelling the matrix material comprises introducing a member (16) into each of the respective cavities or openings (6, 6') to displace or dispel the remaining matrix material from the cavities or openings (6, 6').

5. A method according to claim 4, wherein the step of introducing the displacement members into the respective cavities or openings essentially closes the cavities or openings to isolate the fiber product therefrom, and/or wherein the displacement members (16) have a shape or form that substantially corresponds to a shape or form of the cavities or openings.

6. A method according to any one of claims 1 to 5, wherein the cavities or openings are formed in a surface of the molding tool and are in the form of grooves or channels.

7. A molding tool system for producing fiber composite components, the system comprising:
a molding tool (2) for supporting a semi-finished fiber product (3), wherein the molding tool (2) provides a plurality of cavities or openings (6, 6') for feeding or conveying matrix material to the semi-finished fiber product (3) supported thereon; and
an arrangement (8, 16) configured to expel matrix material remaining in the cavities or openings (6, 6') upon conclusion of feeding of the matrix material;
**characterised in that**
the arrangement comprises a film (8) which is substantially impermeable to the matrix material and which forms or lines the cavities or openings (6, 6') in the molding tool (2), and wherein the arrangement is configured to force at least a portion of the matrix material remaining in the cavities or openings into the semi-finished fiber product (3) supported on the molding tool.

8. A system according to claim 7, wherein the arrangement comprises a plurality of members (16) which are respectively insertable into the plurality of cavities or openings to displace or dispel the remaining matrix material from the cavities or openings.

9. A system according to claim 7 or 8, wherein the cavities or openings (6, 6') are formed as grooves or channels in a surface of the molding tool (2).

## Patentansprüche

1. Verfahren zum Herstellen einer Faserverbundkomponente, wobei das Verfahren folgende Schritte umfasst:
- Bereitstellen eines Formwerkzeugs (2), um darauf ein Halbfertigfaserprodukt (3) zu stützen, wobei das Formwerkzeug mehrere Hohlräume oder Öffnungen (6, 6') aufweist, um zu dem Halbfertigfaserprodukt (3) Matrixmaterial zuzuführen oder zu transportieren, und wobei das Formwerkzeug (2) einen Film (8) umfasst, der für das Matrixmaterial im Wesentlichen undurchdringlich ist, wobei die mehreren Hohlräume oder Öffnungen (6, 6') mit dem Film (8) ausgebildet oder ausgekleidet sind;
- Zuführen von Matrixmaterial zu dem Halbfertigfaserprodukt, das auf dem Formwerkzeug gestützt wird, über die mehreren Hohlräume oder Öffnungen (6, 6'); und
- Austreiben von Matrixmaterial, das in den Hohlräumen oder Öffnungen (6, 6') zurückbleibt, nach Abschluss des Zufuhrschrittes;
wobei der Schritt des Austreibens des Matrixmaterials Folgendes umfasst: Lösen des Films (8) aus den Hohlräumen oder Öffnungen (6, 6'), und Drängen mindestens eines Teils des Matrixmaterials, das in den Hohlräumen oder Öffnungen (6, 6') zurückgeblieben ist, in das Halbfertigfaserprodukt (3).

2. Verfahren nach Anspruch 1, wobei der Schritt des Ausbildens oder Auskleidens der mehreren Hohlräume oder Öffnungen (6, 6') in dem Formwerkzeug mit dem Film (8) umfasst, den Film (8) auf oder gegen eine Fläche (5) des Formwerkzeugs (2) in einem gespannten oder gereckten Zustand zu halten, insbesondere mittels eines Vakuums oder Unterdrucks.

3. Verfahren nach Anspruch 2, wobei das Lösen des Films aus den Hohlräumen oder Öffnungen umfasst, den Film aus dem gespannten oder gereckten Zustand zu lösen.

4. Verfahren nach Anspruch 1, wobei der Schritt des Austreibens des Matrixmaterials umfasst, ein Element (16) in jeden der jeweiligen Hohlräume oder Öffnungen (6, 6') einzuführen, um das verbliebene Matrixmaterial aus den Hohlräumen oder Öffnungen (6, 6') zu drängen oder zu treiben.

5. Verfahren nach Anspruch 4, wobei der Schritt des Einführens der Verdrängungselemente in die jeweiligen Hohlräume oder Öffnungen die Hohlräume oder Öffnungen im Wesentlichen verschließt, um das Faserprodukt davon zu isolieren, und/oder wobei die Verdrängungselemente (16) eine Form oder Gestalt haben, die im Wesentlichen einer Form oder Gestalt der Hohlräume oder Öffnungen entspricht.

6. Verfahren nach einem der Ansprüche 1 bis 5, wobei die Hohlräume oder Öffnungen in einer Fläche des Formwerkzeugs ausgebildet sind und die Form von Nuten oder Kanälen haben.

7. Formwerkzeugsystem zum Herstellen von Faserverbundkomponenten, wobei das System Folgendes umfasst:
- ein Formwerkzeug (2) zum Stützen eines Halbfertigfaserprodukts (3), wobei das Formwerkzeug (2) mehrere Hohlräume oder Öffnungen (6, 6') aufweist, um ein Matrixmaterial zu dem darauf gestützten Halbfertigfaserprodukt (3) zuzuführen oder zu transportieren; und
- eine Anordnung (8, 16), die ausgebildet ist, Matrixmaterial, das in den Hohlräumen oder Öffnungen (6, 6') zurückgeblieben ist, nach Beendigung des Zuführens des Matrixmaterials auszutreiben;
**dadurch gekennzeichnet,**
**dass** die Anordnung einen Film (8) umfasst, der für das Matrixmaterial im Wesentlichen undurchdringlich ist und der die Hohlräume oder Öffnungen (6, 6') in dem Formwerkzeug (2) bildet oder auskleidet, und wobei die Anordnung dafür ausgebildet ist, mindestens einen Teil des Matrixmaterials, das in den Hohlräumen oder Öffnungen zurückgeblieben ist, in das auf dem Formwerkzeug gestützte Halbfertigfaserprodukt (3) zu drängen.

8. System nach Anspruch 7, wobei die Anordnung mehrere Elemente (16) umfasst, die jeweils in die mehreren Hohlräume oder Öffnungen eingeführt werden können, um das verbliebene Matrixmaterial aus den Hohlräumen oder Öffnungen auszutreiben.

9. System nach Anspruch 7 oder 8, wobei die Hohlräume oder Öffnungen (6, 6') als Nuten oder Kanäle in einer Fläche des Formwerkzeugs (2) ausgebildet sind.

## Revendications

1. Procédé de production d'un composant composite fibreux, procédé comprenant les étapes consistant à :
- fournir un outil de moulage (2) destiné à supporter un produit fibreux semi-fini (3) sur celui-ci, dans lequel l'outil de moulage présente une pluralité de cavités ou ouvertures (6, 6') destinées à alimenter ou transporter un matériau de matrice vers le produit fibreux semi-fini (3) et dans lequel l'outil de moulage (2) comprend un film (8) qui est sensiblement imperméable au matériau de matrice, la pluralité de cavités ou ouvertures (6, 6') étant formée ou garnie avec le film (8) ;
- alimenter le matériau de matrice vers le produit fibreux semi-fini supporté sur l'outil de moulage via la pluralité de cavités ou ouvertures (6, 6') ; et
- expulser le matériau de matrice restant dans les cavités ou ouvertures (6, 6') à la fin de l'étape d'alimentation ;
dans lequel l'étape d'expulsion du matériau de matrice comprend la libération du film (8) des cavités ou ouvertures (6, 6') et le forçage d'au moins une partie du matériau de matrice restant dans les cavités et ouvertures (6, 6') jusque dans le produit fibreux semi-fini (3).

2. Procédé selon la revendication 1, dans lequel l'étape de formation ou de garniture de la pluralité de cavités ou ouvertures (6, 6') dans l'outil de moulage avec le film (8) comprend la retenue du film (8) sur ou contre une surface (5) de l'outil de moulage (2) dans un état tendu ou étiré, en particulier sous vide ou par pression négative.

3. Procédé selon la revendication 2, dans lequel la libération du film dans les cavités ou ouvertures comprend la libération du film dudit état étiré ou tendu.

4. Procédé selon la revendication 1, dans lequel l'état d'expulsion du matériau de matrice comprend l'introduction d'un membre (16) dans chacune des cavités ou ouvertures respectives (6, 6') pour déplacer ou dissiper le matériau de matrice restant dans les cavités ou ouvertures (6, 6').

5. Procédé selon la revendication 4, dans lequel l'étape d'introduction des membres de déplacement dans les cavités ou ouvertures respectives ferme essentiellement les cavités ou ouvertures afin d'isoler le produit fibreux de celles-ci, et/ou dans lequel les membres de déplacement (16) ont une configuration ou forme qui correspond sensiblement à une configuration ou forme des cavités ou ouvertures.

6. Procédé selon une quelconque des revendications 1 à 5, dans lequel les cavités ou ouvertures sont formées dans une surface de l'outil de moulage et ont la forme de rainures ou de canaux.

7. Système d'outil de moulage pour produire des composants composites fibreux, système comprenant :
- un outil de moulage (2) destiné à supporter un produit fibreux semi-fini (3), dans lequel l'outil de moulage (2) présente une pluralité de cavités ou ouvertures (6, 6') destinées à alimenter ou transporter un matériau de matrice vers le produit fibreux semi-fini (3) supporté celui-ci ; et
- un agencement (8, 16) configuré pour expulser le matériau de matrice restant dans les cavités ou ouvertures (6, 6') à la fin de l'étape d'alimentation du matériau de matrice ;
**caractérisé en ce que** l'agencement comprend un film (8) qui est sensiblement imperméable au matériau de matrice et qui forme ou garnit les cavités ou ouvertures (6, 6') dans l'outil de moulage (2), et dans lequel l'agencement est configuré pour forcer au moins une partie du matériau de matrice restant dans les cavités ou ouvertures jusque dans le produit fibreux semi-fini (3) supporté sur l'outil de moulage.

8. Système selon la revendication 7, dans lequel l'agencement comprend une pluralité de membres (16) qui peuvent respectivement être introduits dans la pluralité de cavités ou ouvertures afin de déplacer ou dissiper le matériau de matrice restant dans les cavités ou ouvertures.

9. Système selon la revendication 7 ou 8, dans lequel les cavités ou ouvertures (6, 6') ont la forme de rainures ou de canaux formés dans une surface de l'outil de moulage (2).
